# EUROPÄISCHE PATENTANMELDUNG

(11) **EP 1 081 887 A2**
(43) Veröffentlichungstag der Anmeldung: **07.03.2001**
(21) Anmeldenummer: 00118674.1
(22) Anmeldetag: 29.08.2000
(51) Int. Cl.: H04J 3/06

(54) **Verfahren zur Synchronisation von Netzelementen eines Netzes**

(30) Priorität: 01.09.1999 DE 19941679
(71) Anmelder: SIEMENS AKTIENGESELLSCHAFT, 80333 München (DE)
(72) Erfinder: Müller, Andreas, 12683 Berlin (DE); Wahr, Alfons, 82256 Fürstenfeldbruck (DE)

(57) **Zusammenfassung**

Bei diesem Verfahren zur Synchronisation von Netzelementen eines Netzes wird zur Vermeidung von oszillierenden Timing-Markern in einem Auswahlmodul wenigstens eines Netzelementes mindestens ein Timer vorgesehen, der anschlußindividuell nach Umschaltung von einem netzelementespezifischen Takt die Übernahme eines Taktes mit einer besseren Taktqualität von den benachbarten Netzelementen verzögert.

## Beschreibung

Die Technologie der Synchronen Digitalen Hierarchie (SDH) basiert auf einer synchronen Übertragung von Daten. Das bedeutet, daß die Frequenz von Sende- und Empfangstakt der einzelnen Netzelemente, z. B. synchrone Multiplexer, nur sehr geringe Abweichungen haben dürfen. Ein Abweichen vom Takt führt zu einem Bitslip und/oder Frameslip und die zuverlässige und fehlerfreie Informationsübertragung ist nicht mehr gewährleistet.

In komplexen Übertragungsnetzen wird eine möglichst sichere Taktverteilung auf kürzestem Weg realisiert. Außerdem müssen Ersatzwege für die Taktversorgung bei Netzstörungen eingerichtet werden, wobei keine Taktschleifen entstehen dürfen.

Eine Synchronisationsplanung ist bei großen und komplexen Übertragungsnetzen sehr schwierig und aufwendig, denn bei allen Ersatzwegen muß jeweils überprüft werden, ob Taktschleifen entstehen. Wenn ja können diese Ersatzwege nicht genutzt werden und die Qualität der Netzsynchronisation wird eingeschränkt.

Der Erfindung liegt die Aufgabe zugrunde, ein Verfahren zur Vermeidung von Taktschleifen in Netzen der Synchronen Digitalen Hierachie anzugeben.

Die Lösung der Aufgabe ergibt sich aus den Merkmalen des Patentanspruches 1.

Die Erfindung bringt den Vorteil mit sich, daß ein Rotieren der Timing-Marker und damit verbunden eine permanent auftretende Umschaltung in allen Netzelementen eines Teilnetzes bzw. Rings vermieden wird.

Die Erfindung bringt den Vorteil mit sich, daß eine Entstehung von Taktschleifen verhindert wird.

Die Erfindung bringt den Vorteil mit sich, daß die Netzstabilität durch eine sichere Taktversorgung gegeben ist.

Die Erfindung bringt den Vorteil mit sich, daß unterschiedliche Netztopologien auf kürzesten Wegen zuverlässig und stabil synchronisierbar sind.

Die Erfindung bringt den Vorteil mit sich, daß die Qualität, Stabilität und Sicherheit der SDH-Übertragungsnetze wesentlich erhöht wird.

Weitere Besonderheiten sind in den Unteransprüchen angegeben. Das Verfahren wird aus der nachfolgenden näheren Erläuterung zu Ausführungsbeispielen anhand von Zeichnungen ersichtlich.

Es zeigen:
- Figur 1: eine Taktverteilung nach einem Master-Slave-Verfahren,
- Figur 2: definierte Takte in Netzelementen,
- Figur 3: Timing-Marker-Verteilung,
- Figur 4: ein Ring mit einer Mehrzahl von Netzelementen und
- Figur 5: eine Umschaltung auf eine Ersatztaktquelle.

Die nachfolgenden Figurenbeschreibungen 1 bis 4 geben den Stand der Technik wieder.

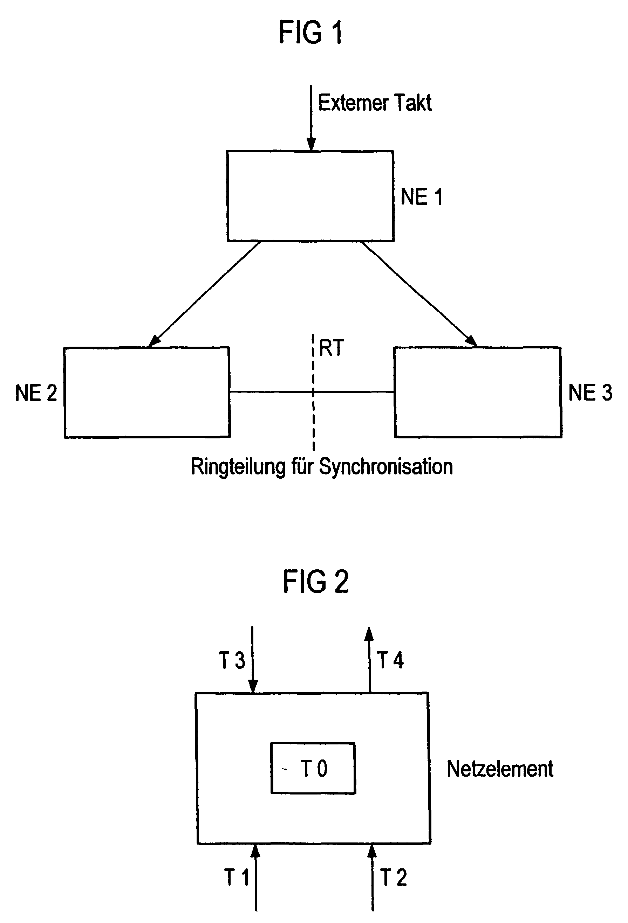

Figur 1 zeigt einen Ausschnitt eines Übertragungsnetzwerkes in dem Daten entsprechend der Synchronen Digialen Hierachie SDH übertragen werden. Dieses Übertragungsnetzwerk ist beispielsweise mit Netzelementen NE 1, NE 2 und NE 3 ausgestattet. In diesem Übertragungsnetzwerk wird ein hierarchisches Taktverteilungskonzept realisiert. Bei diesem Taktverteilungskonzept wird an wenigen Stellen des Netzes ein hochgenauer Takt über ein Taktmaster-Netzelement eingespeist und ausgehend von diesem Master, in den meisten Fällen mit dem übertragenen Datensignal über SDH-Anschlußleitungen an nachfolgende Netzelemente weiter verteilt. Durch Taktrückgewinnung erzeugen sich diese Netzelemente aus dem Eingangs-Datensignal einen Takt und synchronisieren ihren internen Systemtakt entsprechend dem Master-Slave-Verfahren. Das in Figur 1 gezeigte Netzelement NE 1 weist einen Takteingang T3 der mit einer ersten Taktquelle verbunden ist auf. Dieses Netzelement ist das Taktmaster-Netzelement. Über die Datenverbindungen zwischen dem Netzelement NE 1 zu Netzelement NE 2 und Netzelement NE 3 gewinnen die Netzelemente NE 2, NE 3 ihren Systemtakt durch Taktrückgewinnung aus dem ankommenden Signal vom Netzelement NE 1. Für den Fall, daß Störungen bzw. Unterbrechungen auftreten, müssen Vorkehrungen in Form von Ersatzwegen für die Synchronisation vorhanden sein. Für eine Unterbrechung beispielsweise zwischen dem Netzelement NE 1 und dem Netzelement NE 2 würde das Netzelement NE 2 kein Datensignal mehr vom Netzelement NE 1 erhalten und damit auch keinen Takt ableiten können. Eine mögliche Alternative wäre dann, den Takt über das Netzelement NE 3 zu gewinnen, da das Netzelement NE 3 eine gute Taktqualität vom Netzelement NE 1 zur Verfügung hat.

In Figur 2 ist ein Netzelement mit einer Vielzahl von Takteingängen T1, T2 und T3 gezeigt. Um Funktionen wie z.B. externer Takteingang, Umschaltung bei Störungen usw. zu realisieren haben die Netzelemente der Synchronen Digitalen Hierachie, z. B. Multiplexer, folgende definierte Takte:
- T 0:: interner Systemtakt, mit dem in der Regel auch alle abgehenden Datensignale synchronisiert werden.
- T 1:: ein SDH-Datensignal von dem der Takt rückgewonnen werden kann.
- T 2:: ein PDH-Datensignal von dem der Takt rückgewonnen werden kann.
- T 3:: externer Takteingang, zur Einspeisung eines hochgenauen Taktes (2MHz Taktsignal oder PDH-Signal).
- T 4:: externer Taktausgang, der anderen Geräten den Systemtakt bereitstellen kann.

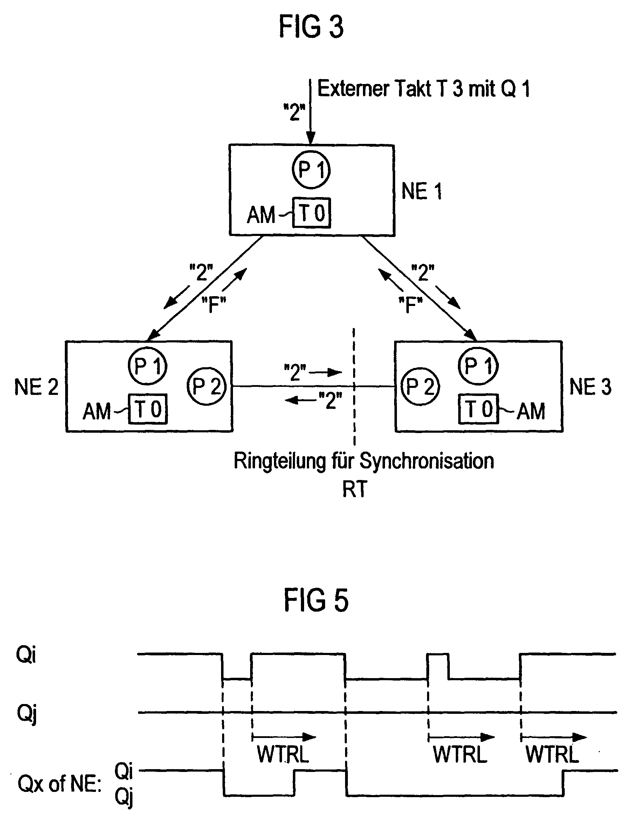

Für eine Steuerung, von welchen möglichen Taktquellen ein Netzelement seinen Systemtakt gewinnen kann, sind im wesentlichen 2 Kriterien, siehe Figur 3, bestimmend: durch Prioritäten z. B. P1, P2,... und durch Taktqualitäten z. B. "2", d. h. Qualität 1.

Nachfolgende Tabelle gibt die Taktqualitäten mit dem zugehörigen Hex-Code und dessen Bedeutung an:

| Qualität | Hex-Code | Bedeutung |
|---|---|---|
| Q 1 | x2 | Primary Reference Clock (beste Taktqualität) |
| Q 2 | x4 | Secondary Reference Clock transit (zweitbeste Qualität) |
| Q 3 | x8 | Secondary Reference Clock local (drittbeste Qualität) |
| Q 4 | xB | Gibt an, daß der interne Taktgenerator freiläuft ("holdover" oder "freerunning") |
| Q 5 | x0 | Qualität unbekannt (für die Zeit von Umschaltvorgängen zwischen zwei Taktquellen) |
| Q 6 | xF | "don't use for sync" (diese Quelle darf nicht zur Synchronisation des Systemtaktes verwendet werden) |
| "x": nicht benutzte Bit 1 bis 4 des S1-Bytes | | |

Erst durch die Vergabe von Prioritäten P1, P2... , beispielsweise durch einen Netzplaner, wird festgelegt welche Quellen (externer Takteingang, ankommende SDH/PDH-Signale) für die Taktgewinnung verwendet werden dürfen und in welcher Reihenfolge diese verwendet werden, wenn mehrere Taktquellen die gleiche Taktqualität aufweisen. Nach dem Stand der Technik werden alle mit Prioritäten versehenen Taktquellen untersucht und die mit der besten Qualität und höchsten Priorität benutzt um den Systemtakt T0 zu synchronisieren. Fällt eine benutzte Taktquelle aus, wird auf die nächste Taktquelle umgeschaltet, die die beste Qualität und höchste Priorität aufweist. Steht keine externe Taktquelle mehr zur Verfügung, läuft der interne Oszillator eines Netzelementes NE A,... frei, daß heißt er benützt seinen netzelementespezifischen Takt, ohne durch einen besseren externen Takt synchronisiert zu werden. Diese Taktgewinnung für den Systemtakt T0 wird in einem Auswahlmodul AM vorgenommen.

Die Taktqualitäten Qx des Taktes werden mit Hilfe eines "Timing-Markers" (S1-Byte im Overhead in STM-N Datensignalen) zwischen den Netzelementen übertragen und machen jeweils eine Qualtiätsaussage über den zur Verfügung stehenden Takt. An den Stellen im Netz, an denen der Takt T3 oder ein Takt einer PDH-Quelle eingespeist wird, d.h. an denen kein Timing-Marker über ein STM-N Signal weitergereicht werden kann, muß die Taktqualität explizit definiert werden.

In Figur 3 sind die Timing-Marker-Werte angegeben die zu den jeweiligen Netzelementen verschickt werden. Bei dem in Figure 3 dargestellten Netz wird im Netzelement NE 1 der externe Takt am Eingang T 3 eingespeist und mit dem Timing-Marker "2", d. h. beste Qualität versehen. Der Timing-Marker wird mit dem SDH-Datensignal über Line-Anschlußleitungen an die Netzelemente NE 2, NE 3 weitergegeben. Die Line-Anschlußleitungen gliedern sich in Line-Anschlüsse EAST und in Line-Anschlüsse WEST, insbesondere für Add-Drop-Multiplexer, auf. Da sich die Netzelemente NE 2, NE 3 auf das Netzelement NE 1 aufsynchronisieren, setzen diese automatisch in die Rückrichtung (zu NE 1) den Wert "F" ein, damit das Netzelement NE 1 diese SDH-Signale nicht als Taktquelle benutzen kann. Zwischen den Netzelementen NE 2, NE 3 wird der Timing-Marker "2" ebenfalls über SDH-Signale weitergegeben. Da sich keiner der beiden Netzelemente NE 2, NE 3 auf diese Verbindung zwischen den Netzelementen NE 2 und NE 3 synchronisiert, wird in die Rückrichtung auch kein anderer Timing-Marker eingesetzt.

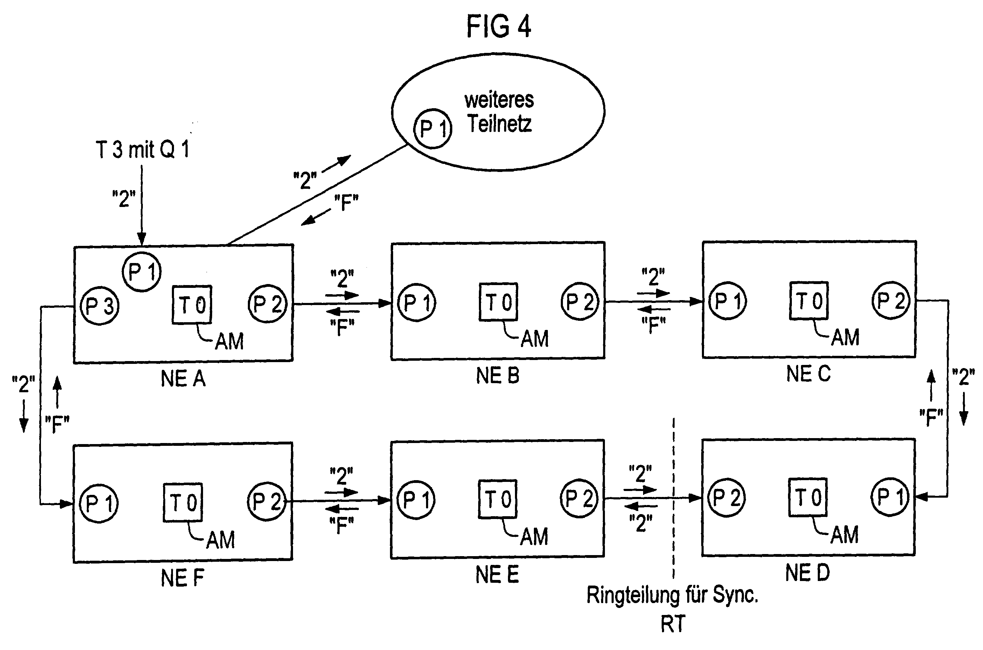

Das in Fig. 4 unter anderem im Netzelement NE A angeordnete Auswahlmodul AM frägt die Verfügbarkeit der ausgewählten Taktquellen zur Takterzeugung ab. Bei Ausfall der aktuellen Taktquelle T3 mit der Taktqualität Q1 wird sofort auf die interne Taktquelle (Quarzoszillator) mit der Taktqualität Q4 des Netzelementes NE A umgeschaltet.

Erkennbar wird ein Umschalten auf die interne Taktquelle mit der Taktqualität Q4 durch eine Änderung des HEX-Codes des S1-Bytes, das im SDH-Overhead bei allen abgehenden SDH-Anschlüssen enthalten ist und durch SDH-Protokoll-Meßgeräte leicht angezeigt werden können.

Fällt bei einem Netz wie in Fig.4 gezeigt die Taktquelle T3 mit der Taktqualität Q1 aus, dann benützt das Auswahlmodul AM des Netzelements NE A zuerst seinen internen Quarz mit der Taktqualität Q4. Diese Taktqualität oder ein eventuell vorhandener besserer externer Takt mit der Taktqualität Qj, z.B. Q2, wird wie oben beschrieben dann über den Timing-Marker zu den Nachbar-Netzelementen der linken und rechten Seite des Netzelementes NE A bis zur durch die Prioritätenvergabe definierten Ringteilung RT übernommen.

In den Netzelementen NE D oder NE E zu beiden Seiten der Ringteilung RT wird anstelle der Taktqualität Q4 über die Ringteilergrenze hinweg die dort noch vorhandene Taktqualität z.B. Q1 übernommen. Der Synchronisationsfluß in einer Ringhälfte dreht damit um und diese Taktqualitäten werden zum ursprünglichen Netzelement NE A weitergereicht, das vor dem Taktausfall Taktmaster war. Der ursprüngliche Taktmaster gibt diese Taktqualitäten nun auch in die andere Ringhälfte weiter. Über die Ringteilergrenze hinweg wird dann der Ring geschlossen und der Timing-Marker oszilliert im Ring bis der ausgefallene Takt T3 mit der Taktqualität Q1 am Netzelement NE A wieder zur Verfügung steht.

Bisher wurde eine Taktschleife dadurch verhindert, daß der Synchronisationsfluß in einem Netzelement, zumeist beim Taktmaster, durch Weglassen der Prioritätsangaben bei den Line-Anschlüssen unterbrochen wurde oder durch Weglassen der Prioritätswerte an den Anschlüssen einer Übertragungsstrecke, die meist direkt auf einer Seite des Taktmasters angeschlossen ist.

Gemäß der Erfindung wird zur Vermeidung von oszillierenden Timing-Markern, die die Qualität des jeweils verwendeten Taktes wiedergibt, im Ring bei Ausfall einer den Ring bisher synchronisierenden Taktquelle eine Wartezeit vor einer Übernahme einer besseren Taktqualität im Auswahlmodul AM mindestens eines Netzelementes eingeführt.

In einer ersten Ausgestaltung gemäß der Erfindung kann ein Netzelement NE im Ring zum "dynamischen Ringteiler" bestimmt werden, z.B. Netzelement NE E in Figur 4. Dabei wird in diesem Netzelement NE E im Auswahlmodul AM vor einer Taktübernahme von beiden Line-Anschlüssen (EAST, WEST) diese um eine Wartezeit WTRL (wait to restore line) verzögert. Diese Wartezeit WTRL wird mit Hilfe eines Timers realisiert.

Im Auswahlmodul AM dieses Netzelementes NE E wird ein Zeitwert für die Wartezeit WTRL dann derart eingestellt, daß der Zeitwert vorzugsweise mindestens zwei mal so groß ist, wie die Laufzeit des Timing-Markers durch den Ring.

Der einzustellende Zeitwert setzt sich bei einem Ring mit n Netzelementen NE 1 bis NE n wie folgt zusammen: Ausgehend von einem Netzelement NE i (1 < i < n) zur dynamischen Ringteilung wird das rechte Nachbar-Netzelement NE i+1 mit einem Takt mit der Taktqualität Q1 versorgt, das linke Nachbar-Netzelement NE i-1 wird mit einem Takt mit der Taktqualität Q2 versorgt. Der oben genannte Zeitwert wird dadurch bestimmt, daß ungünstigstenfalls das Auswahlmodul des Netzelementes NE i+1 bei Ausfall seines externen Taktes der Taktqualität Q1 zur Synchronisation den internen Takt mit der Taktqualität Q4 verwendet, danach wird dieser Takt mit der Taktqualität Q4 maximal einmal durch den Ring bis zum Netzelement NE i-1 weitergereicht, also von NE i+1 bis NE n zu NE 1 bis NE i-1; Nun übernimmt das linke Netzelement NE i-1 seine externe Taktquelle mit der besseren Taktqualität Q2 spätestens zu diesem Zeitpunkt, dann läuft diese nun in entgegengesetzter Richtung maximal ein weiteres mal durch den Ring wieder bis zum rechten Netzelement NE i+1 des Netzelementes NE i. Diese maximale zweifache Laufzeit des Timing-Markers durch n-1 Netzelemente ist somit immer kleiner als der berechnete maximale Zeitwert für n Netzelemente.

Das Netzelement NE E, das als "dynamischer Ringteiler" benutzt wird, unterbricht die Synchronisation durch den Ring wie oben beschrieben. Das Netzelement NE E übernimmt dabei während der Wartezeit WTRL weder vom linken, noch vom rechten Line-Anschluß eine bessere Taktqualität Qi. Erst wenn die Wartezeit WTRL abgelaufen ist und der Takt mit der höchstwertigsten Taktqualität Qi in allen übrigen Netzelementen NE des Ringes sich durchgesetzt hat schaltet nach Ablauf der Wartezeit WTRL auch das Netzelement NE E auf den höchstwertigsten Timing-Marker Qi um. In dem Ring wird nun ein einheitlicher Takt mit der Taktqualität Qi von allen Netzelementen NE benützt.

In allen Auswahlmodulen AM der Netzelemente NE des Rings wird die Wartezeit WTRL auf dem voreingestellten Wert 0 belassen, mit Ausnahme der Wartezeit WRTL im dynamischen Ringteiler-Netzelement NE E.

Wie in Figur 5 gezeigt wird durch das Auswahlmodul AM bei Ausfall des Taktes mit der guten Taktqualität Qi, z.B. Q1, sofort zu einem anderen Takt mit einer niedrigeren Taktqualität Qj, Z.B. Q2 oder Q4, umgeschaltet.

Das Auswahlmodul AM für die Takterzeugung T0 in einem Netzelement NE X untersucht alle möglichen Taktquellen bei denen Prioritäten vergeben wurden, ob eine bessere Taktqualität eines Taktes als der momentan benutzte Takt mit der Taktqualität Qj, z. B. Q2, vorhanden ist. Wird durch das Auswahlmodul AM erkannt, daß eine Taktquelle mit einer besseren Taktqualität Qi, z.B. Q1, wieder anliegt, wird ein zum Line-Anschluß zugeordneter Timer gestartet. Liegt nach Ablauf des durch den Timer vorgegebenen Zeitintervalls die ursprüngliche Taktquelle mit der Qualität Q1 ununterbrochen an, dann schaltet das Auswahlmodul AM auf diese Taktquelle Qi, z.B. Q1, um. Diese vom Auswahlmodul AM selektierte Taktquelle mit der Taktqualität Qi, z.B. Q1, wird zum Synchronisieren des Taktes T0 verwendet, der seinerseits zur Generierung aller abgehenden SDH- und PDH-Signale verwendet wird.

In einer zweiten Ausgestaltung der Erfindung werden für die Line-Anschlüsse, die bei einem Netzelement z. B. als Line-Anschluß-EAST- und Line-Anschluß-WEST bezeichnet werden, separate Wartezeiten WTRL-EAST, WTRL-WEST bei Übernahme der Taktqualitäten eingeführt.

Bei den durch eine Übertragungsstrecke direkt verbundenen, benachbarten Netzelementen NE E, NE D, siehe Fig. 4, wird in dem Auswahlmodul AM des jeweiligen Netzelmentes für den Line-Anschluß dieser Übertragungsstrecke zwischen diesen beiden Netzelementen die Wartezeit WTRL-EAST in dem einen, und WTRL-WEST in dem anderen Netzelement mit einem Wert (zwei mal Timing-Marker-Durchlaufzeit durch den Ring), wie oben ausgeführt, belegt. Die Wartezeiten in diesen Anschlußmodulen zu den jeweils weiteren Netzelementen führenden Line-Anschlüsse sowie die Wartezeiten in den Auswahlmodulen der restlichen Netzelemente des Ringes verbleiben beispielsweise auf Null bezogen auf das genannte Beispiel.

Aus dieser Ausgestaltung ergibt sich eine zusätzliche Möglichkeit, daß die Übertragungsstrecke zwischen zwei benachbarten Netzelementen, z. B. zwischen den Netzelementen NE D und NE E, als dynamische Ringteilung RT benutzt werden kann.

Dies bringt den Vorteil mit sich, daß nun bei allen Netzelementen des Ringes das Auswahlmodul AM sofort auf die bestmöglichste Taktqualität umschaltet für die jeweilige Synchronisation des internen Taktes T0.

Obige Betrachtungen galten insbesondere einem Netz mit Ringstruktur. Bei einem großen, komplex vermaschten Netz werden diese in Elementar-Netze mit einer einfachen Ring- oder Kettenstruktur untergliedert.

In diesen Elementar-Netzen, werden vorzugsweise kleine Wartezeiten WTRL zur Synchronisation in den Auswahlmodulen der einzelnen Netzelemente verwendet. Dies führt dazu, daß sich die Netzelemente NE x eines Elementar-Netzes schnell auf einen jeweiligen Takt mit der Taktqualität Qx oder Qy,... synchronisieren.

Diese Elementar-Netze werden nach der ersten Ausgestaltung durch Netzelemente oder nach der zweiten Ausgestaltung durch eine Übertragungsstrecke verbunden. Bei Verbindungen zwischen diesen Elementar-Netzen werden in den jeweiligen Auswahlmodulen höhere Wartezeiten als in den Elementar-Netzen zur Unterbindung von oszillierenden Timing-Markern durch Elementar-Netz-Schleifen verwendet.

Dies erfordert bei einem Elementar-Netz, das aus einem Ring besteht, daß im Auswahlmodul bei der Taktselektion auch Takte von den Nicht-Line-Anschlüssen, den sogenannten Tributary-SDH-Anschlüsse, für die TO 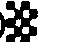 Synchronisation verwendet werden. Der von einem Nicht-Line-Anschluß verwendete Takt wird ebenfalls mit einer Wartezeit WTRT (wait to restore tributary) verzögert.

Haben sich beispielsweise zwei benachbarte Elementar-Netze auf Takte mit unterschiedlichen Taktqualitäten Qx, Qy synchronisiert, dann wird bei Ablauf der höheren Wartezeit (WTRL oder WTRT) der Takt mit der besseren Taktqualität Qx vom Nachbar-Elementar-Netz mit dem Takt der minderen Taktqualität Qy übernommen.

## Patentansprüche

1. Verfahren zur Synchronisation von zu einem Netz, insbesondere ringförmig konfigurierte Kommunikationsnetze, verbundener Netzelemente (NE A, NE B,....,NE X), bei dem mindestens ein erstes Netzelement (NE A) mit einer ersten Taktquelle verbunden ist und ausgehend vom ersten Netzelement (NE A) ein Takt mit einer Aussage über dessen Qualität an die mit dem ersten Netzelement (NE A) über Line-Anschlüsse verbundenen weiteren Netzelemente (NE B,..., NE F,...) verteilt wird und in den Netzelementen jeweils ein Auswahlmodul (AM) zur Auswahl des Taktes mit der besten Taktqualität vorgesehen ist,
**dadurch gekennzeichnet,**
daß in dem Auswahlmodul (AM) anschlußindividuell nach Umschaltung von einem netzelementespezifischen Takt die Übernahme eines Taktes in einem Netzelement mit einer besseren Taktqualität von den benachbarten Netzelementen verzögert wird.

2. Verfahren nach Anspruch 1,
**dadurch gekennzeichnet,**
daß die verzögerte Weiterleitung des Taktes mit der besseren Taktqualität mindestens doppelt so lange dauert wie die Gesamtlaufzeit eines die Qualtität eines Taktes repäsentierenden Timing-Markers durch den Ring.

3. Verfahren nach Anspruch 1,
**dadurch gekennzeichnet,**
daß im Auswahlmodul (AM) die Übernahme des Taktes mit der besseren Taktqualität von beiden Line-Anschlüssen (EAST, WEST) des jeweiligen Netzelementes gleich lang verzögert wird.

4. Verfahren nach Anspruch 1,
**dadurch gekennzeichnet,**
daß im Auswahlmodul (AM) die Übernahme des Taktes mit der besseren Taktqualität von den Line-Anschlüssen mit einer unterschiedlichen Verzögerungszeit erfolgt.

5. Verfahren nach Anspruch 1,
**dadurch gekennzeichnet,** daß im Auswahlmodul (AM) die Übernahme des Taktes mit der
besseren Taktqualität von Nicht-Line-Anschlüssen mit einer Verzögerungszeit erfolgt.

6. Verfahren nach Anspruch 1,
**dadurch gekennzeichnet,**
daß bei einem komplexen Netz, dieses in Elementar-Netze bestehend aus Ring- oder Kettenstruktur untergliedert wird.

7. Verfahren nach Anspruch 6,
**dadurch gekennzeichnet,**
daß in diesen Elementar-Netzen in den Auswahlmodulen der einzelnen Netzelemente die Übernahme der besseren Taktqualitätverzögert durchgeführt wird.

8. Verfahren nach Anspruch 7,
**dadurch gekennzeichnet,**
daß bei den Auswahlmodulen (AM) der Netzelemente die jeweils zwei Elementar-Netze verbinden, größere Verzögerungszeiten bei der Übernahme des Taktes benützt werden, als in den Auswahlmodulen der Netzelemente der Elementar-Netze verwendet werden.
